# EUROPEAN PATENT SPECIFICATION

(11) **EP 3 638 517 B1**
(45) Date of publication and mention of the grant of the patent: **12.05.2021**
(21) Application number: 18733332.3
(22) Date of filing: 23.05.2018
(51) Int. Cl.: B60C 11/13, B60C 11/03

(54) **TYRE FOR VEHICLE WHEELS**
REIFEN FÜR FAHRZEUGRÄDER
PNEU DESTINÉ À DES ROUES DE VÉHICULE

(30) Priority: 12.06.2017 IT 201700064924
(43) Date of publication of application: 22.04.2020
(73) Proprietor: Pirelli Tyre S.p.A., 20126 Milano (IT)
(72) Inventor: SPEZIARI, Diego, 20126 Milano (IT); FIORAVANTI, Anna Paola, 20126 Milano (IT)
(74) Representative: Susanetto, Carlo
(86) International application number: PCT/IB2018/053630
(87) International publication number: WO 2018/229578

(56) References cited:
- EP-A1- 1 547 820
- JP-A- 2006 218 948
- US-A1- 2009 266 459
- US-A1- 2015 239 296

## Description

The present invention relates to a tyre for vehicle wheels, in particular a tyre for high-performance automobiles.

A tyre generally comprises a carcass structure that is shaped like a torus around an axis of rotation and has at least one carcass ply having end flaps that engage in respective annular anchoring structures, said beads.

A belt structure is provided on a radially outer position of the carcass structure which, in the case of tyres for cars, comprises at least two bands that are radially superposed made by rubber-coated fabric provided with reinforcement cords, usually metal cords, arranged in each band in parallel with one another but crosswise with respect to the cords of the adjacent band, preferably symmetrically to the equatorial plane of the tyre.

The belt structure preferably also comprises a third layer of fabric or metal cords that is also on the radial outside of the underlying belt bands, at least at the ends thereof, which cords are arranged circumferentially (at 0 degrees). In "tubeless" tyres, a radially internal layer is also provided, known as a "liner" layer, which is impermeable to ensure the air-tightness of said tyre.

A tread band is applied to the radially outer position of the belt structure, which tread band is made of elastomeric material and on which there is defined a tread surface intended to come into contact with the road surface.

In order to ensure sufficient road holding on a wet road surface too, the tyres comprise a tread band provided with recesses of different shapes and geometries, the main function of which is to allow the water present between the surface of the tyre and the road surface to be evacuated when the tyre and the road come into contact with one another, thereby preventing the hydrostatic pressure caused by the impact of the water against the tyre as it moves forward from causing the tyre to rise, even partially, from the road surface and to consequently cause the vehicle to lose control (a phenomenon known as "aquaplaning").

The recesses provided in the circumferential direction also affect the tyre's directionality and running stability in relation to its ability to withstand tangential stresses parallel to the axis of rotation of the tyre.

The recesses provided in the transverse direction in turn affect the traction of the tyre, that is its ability to transmit the tangential stresses that are parallel to the direction of travel to the road surface, in particular during acceleration and braking of the motor vehicle.

Altogether the recesses define a plurality of blocks on the tread band, on each of which blocks a surface is defined, on the radially outer position thereof, intended to come into contact with the road surface and thus forms a portion of the tread surface of the tyre.

EP 2829421, EP 2918427, EP 1547820, US 2015/239296, US 2009/266459 and JP 2006218948 describe tyres formed according to the prior art.

The applicant has found that, when the blocks are subjected to a tangential stress, they can deform, changing their shape, sometimes significantly.

In particular, the applicant has found that the magnitude of the deformation depends on both the characteristics of the material of the tread band and on the shape and position of the block, and can be particularly noticeable in the case of considerable tangential stresses, such as when braking.

In fact, in this case the applicant has found how overpressure is generated at the edge of the block that faces the tangential stress (generally referred to as the front edge), which overpressure tends to press the corresponding block portion against the road surface, whereas a corresponding pressure decrease is generated at the edge of the block that faces the side opposite to the tangential stress (rear edge), which pressure decrease can even cause the corresponding block portion to rise.

However, this block behaviour results in a series of disadvantages.

The applicant has in fact verified that, as a result of such partial rising, as mentioned above, the contact area between the block and the road surface is reduced and the overall frictional force exerted on the road surface by the tyre is also reduced, as a result.

In addition, the applicant observed a reduction in the coefficient of friction at the block portion that is subjected to overpressure, which can result in a further reduction in the overall braking ability of the tyre.

The applicant has also found that the provision of a chamfer between the lateral wall of the block and the corresponding tread surface portion, which chamfer is formed by an inclined plane, can have negative repercussions on other parameters of the tyre. For example, sufficiently wide and deep chamfers may cause an excessive reduction in the size of the surface of the block that is in contact with the road surface and a reduction in the rigidity of the block, with the consequent reduction in its resistance to tangential stresses.

The applicant has also found that the manner in which the recesses are connected to the tread surface also affects other significant parameters of the tyre, including in particular the noise of the tyre and its rolling resistance. In recent years, these parameters have become increasingly important when designing tyres since they are directly related to important environmental aspects, such as noise pollution and fuel consumption.

The applicant has therefore felt the need to provide a tyre in which the blocks are designed so as to improve their behaviour in the event of tangential stresses, and to therefore improve the overall traction performance of the tyre, particularly during braking.

Lastly, the applicant has found that a block in which the lateral wall and the tread surface portion are connected to one another by a connection surface that is joined to the tread surface portion in a substantially tangential manner and is joined to the lateral wall so as to form a corner, behaves better when subjected to a tangential stress directed towards said lateral wall. In fact, the applicant has verified that a block having the above-mentioned shape deforms in such a way that it maintains a relatively raised area that is in contact with the road surface and remains sufficiently constant as the degree of deformation changes.

In particular, in a first aspect, the invention relates to a tyre for vehicle wheels according to claim 1
The applicant has verified that, due to these characteristics, when the block is subjected to a tangential stress directed towards the first lateral wall, it deforms in such a way that part of the connection surface, from the contact line with the tread surface portion, also gradually comes into contact with the road surface.

This at least partly compensates for possible rising of the rear edge of the block.

In addition, the fraction of the connection surface that becomes part of the contact area of the block can advantageously be adjusted depending on the magnitude of the deformation such that greater deformation of the block corresponds to a larger fraction of the connection surface that gradually comes into contact with the road surface.

Furthermore, the progressive addition of the connection surface as a new contact area of the block at the front edge of the block makes it possible to limit localised overpressures.

Furthermore, the provision of a corner at the contact line between the connection surface and the lateral wall makes it possible to dissociate the curvature of the connection surface from the depth at which the connection surface joins the lateral wall, thereby achieving a greater degree of freedom with regard to the dimensions of the connection surface, and in particular its width, depth and curvature.

In this way, it is possible to advantageously optimise the combination of these various parameters.

Furthermore, the provision of a corner between the connection surface and the lateral wall improves the ability to evacuate water with regard to both a traditional block configuration, in which the lateral wall extends, while maintaining a uniform orientation, until it intersects the tread surface, and to a configuration in which the lateral wall and the tread surface portion are connected to one another by a connection surface that is joined to said lateral wall and said tread surface portion in a substantially tangential manner.

In fact, on the one hand the volume available for the water to enter the recess is increased, and, on the other hand, the presence of the corner suitably allows for the water to be held inside said recess, thereby preventing it from getting wedged easily between the block and the road surface. This prevents aquaplaning and improves the performance of the tyre when braking on wet roads.

Furthermore, the presence of a corner between the connection surface and the lateral wall defines a discontinuity of planes of reflection of the light that particularly distinguishes the recess from the block, making this tread band portion noticeably visible.

This advantageous effect is apparent in both the traditional block configuration briefly described above, and in particular the block configuration whereby the connection surface is tangentially joined to both the tread surface portion and the lateral wall.

The term "equatorial plane" of the tyre means a plane that is perpendicular to the axis of rotation of the tyre and divides the tyre into two symmetrically equal parts.

The "circumferential" direction means a direction that generally points in the direction of rotation of the tyre, or, in any case, is slightly inclined with respect to the direction of rotation of the tyre.

The term "recess" means a groove or notch made in a tread band portion, which extends in a main, either linear or curvilinear, direction, and has a depth of at least 2 mm, preferably of at least 3 mm.

The "longitudinal direction" of a recess means the main direction of extension of the recess on the tread surface, irrespective of its position or orientation.

"Block" means a tread surface portion that is laterally delimited by at least one recess, preferably by at least two separate recesses, on the radial external surface of which, a tread surface portion intended to come into contact with the road surface is defined.

Therefore, blocks are considered to be both a tread band portion that has a closed contour and is delimited by three or more recesses, and a circumferential rib that is delimited by a pair of recesses that extend circumferentially around the tread band.

The "lateral wall" of a block means the surface that generally extends from a bottom of a recess that delimits the block towards the tread surface.

The "longitudinal direction" of a lateral wall of a block means the direction parallel to the longitudinal direction of the recess, which is delimited by the lateral wall.

The "front edge" of a block means the edge of the block that is delimited by the lateral wall facing a tangential stress which is applied to the radially external surface of the block, while the "rear edge" means the edge of the block that is delimited by the lateral wall facing the side opposite this tangential stress. However, it should be noted that classifying an edge as the front or rear edge is strictly dependent on the direction of the tangential stress applied to the block, and therefore said edge can be a front edge during braking and a rear edge during acceleration.

The "width" of a connection surface extending between the lateral wall of a block and the tread surface portion thereof means the extent to which this surface projects on the tread surface, which extent is calculated in a direction that is substantially perpendicular to the longitudinal direction of the recess.

Two surfaces join together in a "substantially tangential" manner when the respective tangent planes of the two surfaces form an acute angle of zero or less than 5° at the line of contact therebetween.

The "volumetric removed portion" of a block defined by a connection surface means the virtual volumetric block portion that is delimited by the connection surface and by the extension of the lateral walls and of the tread surface.

The "removed surface portion" of a block defined by a connection surface means the virtual block surface portion that is located on a section plane that is substantially perpendicular to the longitudinal direction of the lateral wall, and is delimited by the profile of the connection surface and by the profile of the extension of the lateral walls and of the tread surface.

These parameters represent the part of the block (understood in a three-dimensional sense in the case of the volumetric removed portion or in a two-dimensional sense on the section plane in the case of the removed surface portion) which, due to the presence of the connection surface, is missing compared with when the block is designed not having said connection surface, whereby the lateral walls extend, maintaining the same orientation, until they intersect the tread surface portion of the block.

In the particular case in which the lateral wall of the block has a curvature in which the concavity faces the inside of the block, at the point at which said wall is joined to the connection surface, the "volumetric removed portion" of the block is considered to be the virtual block portion which is delimited by the connection surface and by the extension of the tread surface and of the tangent of the lateral wall at its inflection point. Said point is defined as the point at which the curvature of the lateral wall passes from facing the outside of the block, this point generally being discernible at the point where said wall joins the bottom of the recess, to facing the inside of the block. In this same particular case, the "removed surface portion" is defined in exactly the same way.

The "volume of the block" means the volume of the block that is calculated up to the depth of the recesses that define said block.

In the above-mentioned aspect, the present invention can comprise at least one of the additional preferred features specified below.

Said connection surface is preferably joined to said tread surface portion along a contact line at which the tangent plane of said connection surface and the tangent plane of said tread surface portion substantially coincide.

Said connection surface is preferably joined to said first lateral wall at an average depth of less than 50% of the depth of said recess.

Said connection surface is preferably joined to said first lateral wall at an average depth of less than 35% of the depth of said recess.

Said connection surface is preferably joined to said first lateral wall at an average depth of less than 2 mm, which is measured from the tread edge.

Said connection surface is preferably joined to said first lateral wall at an average depth of more than 0.2 mm, which is measured from the tread edge.

Connection surfaces joined to the first lateral wall at a depth of less than 0.2 mm or more than 2 mm demonstrate less substantial improvements during braking or an excessive reduction in the rigidity of the block.

Said connection surface is preferably joined to said first lateral wall at an average depth of between 0.4 mm and 1.5 mm.

Even more preferably, said connection surface is joined to said first lateral wall at an average depth of between 0.5 mm and 1 mm.

The most suitable values in terms of the block's behaviour with respect to tangential stresses are found in this depth range.

Said connection surface is preferably joined to said first lateral wall at a variable depth along the longitudinal extent of said lateral wall.

In this way, the behaviour of the block during deformation can be optimised for each block section which, depending on its shape and position on the tread band, can deform in a different manner from section to section.

In particular, in the block portion where two recesses intersect, the connection surface can join said lateral wall at a depth that is greater than the depth of the immediately adjacent portions, preferably at a depth that is 20% greater.

In addition, at the point where two recesses intersect, the connection surface can have a width that is greater than the width of the immediately adjacent portions, preferably a width that is 20% greater.

The width of said connection surface is preferably more than 1.5 mm, and more preferably more than 2 mm.

In this way, the connection surface extends far enough for it to adequately contribute to the contact area of the block during deformation, but, at the same time, without excessively decreasing the contact area of the block in the initial conditions, that is when the block is not deformed by tangential stresses.

Said acute angle formed by the tangent plane of said first lateral wall and by the tangent plane of said connection surface at said line of contact between said connection surface and said first lateral wall is preferably between 30° and 75°.

More preferably, said acute angle is between 40° and 70°.

Even more preferably, said acute angle is between 55° and 65°.

In another embodiment, said acute angle is approximately 60°.

This angular value was found to provide the best results in terms of controlled deformation of the block in the event of tangential stresses.

The volumetric removed block portion defined by said connection surface is preferably a fraction that is smaller than approximately 4% of the volume of said block.

More preferably, said volumetric removed portion is a fraction that is smaller than approximately 2% of the volume of said block.

Even more preferably, said volumetric removed portion is a fraction that is smaller than approximately 1% of the volume of said block.

Said volumetric removed portion is still more preferably a fraction that is smaller than approximately 0.5% of the volume of said block.

The volumetric removed portion (in the single connection) is preferably between 5 and 100 mm³.

More preferably, the volumetric removed portion (in the single connection) is between 10 and 50 mm³.

More preferably, the volumetric removed portion (in the single connection) is between 15 and 30 mm³.

The removed surface portion is preferably between 0.2 and 3 mm².

The removed surface portion is more preferably between 0.4 and 1 mm².

The removed surface portion is more preferably between 0.5 and 0.7 mm².

Given the overall dimensions of the block and its rigidity, the various design parameters of the connection surface (depth, width, angle, curvature) are therefore combined in various ways within the ranges specified above, such that the overall block volume quantity that is missing with respect to a traditional block design, whereby the lateral wall extends as far as the tread surface whilst maintaining substantially the same inclination, is reduced so as not to compromise the rigidity of the block and, at the same time, so as to achieve controlled deformation thereof in the event of tangential stresses.

Said arc of a circumference preferably has a radius of curvature of between 2 and 6 mm.

In this way, the gradual provision of the connection surface as the area in contact with the road surface is well balanced with the loss of the contact area at the rear edge of the block.

Furthermore, the tyre is simpler to produce than when the tread surface is designed having complex curvatures.

Said connection surface preferably extends between said lateral wall and said tread surface by a section that is larger than 50% of the longitudinal extension of said first lateral wall.

Said connection surface preferably extends between said lateral wall and said tread surface by a section that is larger than 90% of the longitudinal extension of said first lateral wall.

Said block preferably comprises a second lateral wall, which is separate from said first lateral wall and extends, at least in part, from a bottom of one of said recesses, towards said tread surface portion, said second lateral wall being connected to said tread surface portion, at least by a section thereof, by means of a connection surface that is similar to the connection surface between said first lateral wall and said tread surface portion.

In this way, the block behaves in a very similar manner in the event of tangential stresses directed in the opposite direction. Furthermore, this configuration makes it possible to use the tyre in any main direction of rotation, for example in tyres having an asymmetrical tread pattern.

In a preferred alternative embodiment, said block comprises a second lateral wall, which is separate from said first lateral wall and extends, at least in part, from a bottom of a second of said recesses, towards said tread surface portion, said second lateral wall being connected to said tread surface portion, at least by a section thereof, by means of a substantially planar connection surface.

In this alternative embodiment, a planar chamfer is provided on the rear edge of the block.

In another alternative embodiment, the second lateral wall is connected to the tread surface portion without a connection surface.

Said first lateral wall and said second lateral wall preferably extend on opposite sides of said block.

Said block is preferably made in a shoulder region defined on said tread band, and said lateral wall extends in a longitudinal direction that is at an angle of between 50° and 90° to a direction that is parallel to an equatorial plane and to the tread surface of said tyre.

Said block is preferably made in a central region defined on said tread band.

Said plurality of blocks preferably comprise blocks made in a shoulder region of said tread band, in which blocks said connection surface is joined to said first lateral wall at a first depth with respect to said tread surface, and blocks made in a central region of said tread band, in which blocks said connection surface is joined to said first lateral wall at a second depth with respect to said tread surface, which second depth is smaller than said first depth.

Said first depth is preferably greater than said second depth by between 30% and 50% of said second depth.

In a preferred embodiment, said first depth is greater than said second depth by approximately 40% of said second depth.

Said first depth is preferably between 0.5 and 2 mm and said second depth is preferably between 0.5 and 1.5 mm.

In this way, the design of the connection surfaces of the blocks can be differentiated on the basis of the position of the block on the tread band.

The applicant has in fact verified that, when braking, the shoulder regions are subjected to greater tangential stresses than the central region, and therefore the corresponding deformation of the block may also be different.

In one embodiment, not forming part of the present invention, said connection surface comprises a first section that is substantially planar and extends from said first lateral wall, and a second curvilinear section that is connected to said first section and to said tread surface portion.

Said first connection surface section is preferably substantially parallel to said tread surface portion so as to form a step together with said first lateral wall.

Said first connection surface section preferably has a width of between 1 and 3 mm, more preferably between 1.5 and 2 mm.

This design of the connection surface makes it possible to arrange a recess, which has an even greater ability to evacuate the water, close to the tread surface without excessively weakening the structure of the block.

Furthermore, the provision of a planar section at the first lateral wall makes it possible to obtain new planes of reflection of the light that also highlight the presence and geometry of the recess.

In one embodiment, not forming part of the present invention, said connection surface has opposing concavities at said line of contact with said first lateral wall and at said line of contact with said tread surface portion.

In one embodiment, said first lateral wall comprises a curvilinear profile at least at said contact line with said connection surface.

At said line of contact with said connection surface, said first lateral wall preferably comprises a concavity that matches the concavity of said connection surface.

The features and advantages of the invention will become clearer from the detailed description of a few preferred embodiments thereof, shown by way of non-restrictive example and with reference to the accompanying drawings, in which:
- Fig. 1 is a schematic front view of a first embodiment of a tyre for vehicle wheels, which is formed in accordance with the present invention;
- Fig. 2 is a schematic, enlarged cross-sectional view of a block of the tread band of the tyre in Fig. 1, in an operating condition in which the block is not subjected to tangential stresses;
- Fig. 3 is a schematic view of the block in Fig. 2 in an operating condition in which the block is subjected to a tangential stress;
- Fig. 4 is an upside-down schematic view of a significant portion of the block in Fig. 2 that has been further enlarged;
- Fig. 5 is a first graph that compares the progression of the area in contact with the road surface as a function of the deformation of said contact area for a block designed according to the present invention, with blocks in which the connection between the lateral wall and tread surface portion has a different design;
- Fig. 6 is a second graph that compares the progression of the tractive force of a block as a function of the deformation of said block for a block designed according to the present invention, with blocks in which the connection between the lateral wall and the tread surface portion has a different design;
- Fig. 7 is a sectional view of a block having different connection profiles between the lateral wall and tread surface portion, which block is the object of the analysis which the graphs of Fig. 5 and 6 are based on;
- Fig. 8 is a schematic cross-sectional view of a block not in accordance with the present invention;
- Fig. 9 is a schematic cross-sectional view of a block not in accordance with the present invention;
- Fig. 10 is a schematic cross-sectional view of a block not in accordance with the present invention.

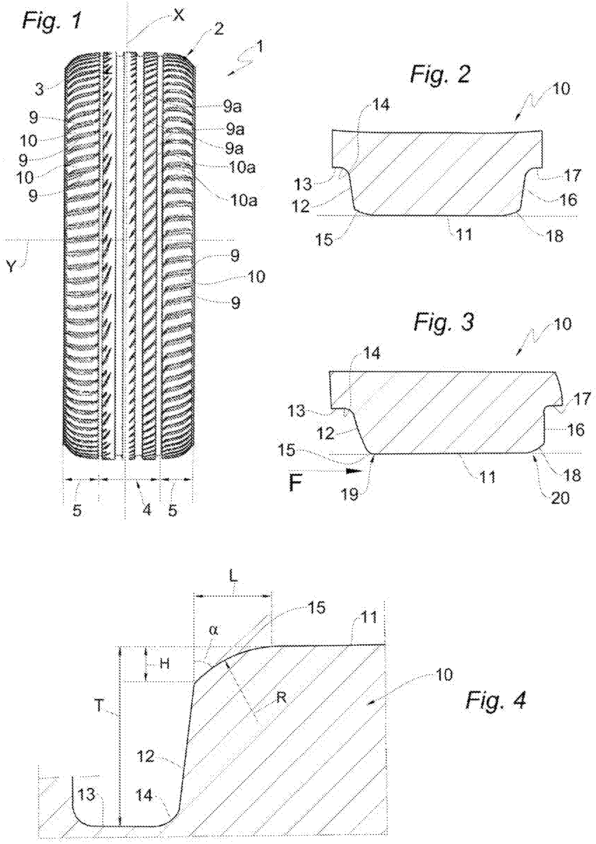

With initial reference to Fig. 1 to 4, reference numeral 1 indicates a tyre for vehicle wheels as a whole, which is formed in accordance with the present invention.

The tyre 1 has a conventional, generically toroidal shape, which extends around an axis of rotation so as to define an axial direction Y of the tyre and which is crossed by an equatorial plane X that is perpendicular to the axis of rotation.

The tyre 1 comprises a tread band 2 on which there is defined a tread surface 3, which is positioned on the radial outside of the tread band 2 and intended to come into contact with a road surface.

The tyre 1 is preferably intended for mounting on a high-performance automobile and has, for example, a nominal section width of approximately 225 mm with a rim diameter of 17 inches.

A central region 4, which extends circumferentially and symmetrically around the equatorial plane X, and a pair of shoulder regions 5, which respectively extend on the axially opposing sides of the central region 4, up to respective lateral edges 6 and 7 of the tread band 2, are defined on the tread band 2.

A plurality of recesses 9 and 9a are made in the tread band 2, which respectively delimit a plurality of blocks 10 and 10a, which are respectively formed in the shoulder regions 5 and in the central region 4 of the tread band 2.

Altogether, the recesses 9 and 9a and the blocks 10 and 10a form the tread pattern of the tyre 1.

The recesses 9 extend transversally in a longitudinal direction that is at an angle of approximately 85° to the equatorial plane X, while the recesses 9a in the central region may extend with an inclination of zero with respect to the equatorial plane (circumferential recess), or may extend at a variable inclination with respect to the equatorial plane X, for example of between approximately 30° and approximately 50°.

By way of example, Fig. 2 to 4 schematically show a block 10 made in a shoulder region 5 of the tread band 2, it being understood that, unless stated otherwise, the same considerations similarly also apply to a block 10a made in the central region 4.

The block 10 comprises a tread surface portion 11, which is defined on the radially external surface thereof and intended to come into contact with the road surface, at least when the block is in the operating configuration in which it is not deformed by tangential stresses, and a first lateral wall 12 that extends, at least in part, from a bottom 13 of the recess 9, towards the tread surface portion 11.

In the example described here, the recess 9 has a depth T of between 6 and 7 mm, for example approximately 6.5 mm, and extends in a main longitudinal direction, which, in Fig. 2 to 4, is perpendicular to the plane of the figures.

The first lateral wall 12 is connected to the bottom 13 of the recess 9 by a curved surface 14, the concavity of which is directed towards the outside of the recess and of the block.

The first lateral wall 12 therefore extends towards the tread surface portion 11 so as to have a substantially planar orientation and at a substantially constant inclination that slightly diverges from the radial direction of the tyre, together with which said first lateral wall 12 forms an angle of between approximately 2° and approximately 15°, for example approximately 5°.

The first lateral wall 12 is connected, at least by 90% of its longitudinal extension, to the tread surface portion 11 by means of a connection surface 15.

In the first example described here, which represents the most preferred embodiment of the invention, the connection surface 15 is formed by an arc of circumference having a radius of between 2 and 6 mm, preferably of approximately 5 mm.

The connection surface 15 is joined to the first lateral wall 12 along a contact line at which the tangent plane of the first lateral wall 12 and the tangent plane of the connection surface 15 form an acute angle α of approximately 60°.

In this way, a corner 16 is defined between the connection surface 15 and the first lateral wall 12.

Furthermore, the connection surface 15 is joined to the tread surface portion 11 along a line of contact in a substantially tangential manner. In particular, at the line of contact between the connection surface 15 and the tread surface portion, the two planes that are tangential to the surfaces coincide such that the angle formed thereby is zero.

The connection surface 15 has a width L of approximately 2.5 mm.

The connection surface 15 is joined to the first lateral wall 12 at a first average depth H of approximately 0.7 mm, corresponding to approximately 10% of the depth of the recess 9.

In a block 10a made in the central region 4 of the tread band 2, the connection surface 15 is joined to the first lateral wall 12 at a second average depth of approximately 0.5 mm and has a width of approximately 1.8 mm.

In this preferred example, the first depth H at which the connection surface 15 is joined to the first lateral wall 12 remains substantially constant along the longitudinal extent of the first lateral wall. However, in alternative embodiments, this first depth may vary along the first lateral wall.

The block 10 also comprises a second lateral wall 16, which extends on the opposite side and substantially in parallel with the first lateral wall 12.

The second lateral wall 16 extends from a bottom 17 of a recess, which is separate from the recess 9, towards the tread surface portion 11 and is connected thereto by means of a connection surface 18 that is fully analogous to the connection surface 15.

In a first alternative variant, not shown, the second lateral wall 16 is connected to the tread surface portion 11 by a substantially planar connection surface which forms respective corners at the lines of contact with the tread surface portion and with the second lateral wall 16.

This planar connection surface is preferably inclined with respect to the tread surface portion 11 and to the second lateral wall 16 by an angle of between 30° and 60°, for example 45°.

In a second alternative variant, not shown either, the second lateral wall 16 is directly connected to the tread surface portion 11 without a connection surface, thereby forming a corner at the contact line.

In a third alternative variant, not shown either, the second lateral wall 16 is connected to the tread surface portion 11 by means of a curved connection surface, which is connected to both the tread surface portion 11 and the second lateral wall 16 in a substantially tangential manner. In these alternative variants, the connection surface 15 is preferably always arranged on the edge of the block that is first to come into contact with the road surface.

In this way, the tyre is mounted on the vehicle such that it rotates in a preferential direction when travelling in the normal direction of travel, defining a "directional tyre".

In Fig. 2, the block 10 is shown in an operating configuration, in which it is not deformed by tangential stresses, whereas in Fig. 3, said block is shown in an operating configuration, in which it is deformed by a tangential stress F directed substantially perpendicularly towards the first lateral wall 12.

For example, the tangential stress F is caused by braking of the vehicle on which the tyre 1 is mounted.

The direction of the tangential stress F defines a front edge 19, which substantially corresponds to the connection surface 15, and a rear edge 20, which substantially corresponds to the connection surface 18, on the block 10.

As can be seen in Fig. 3, due to the tangential stress F, the block 10 is deformed such that it bends towards its front edge. In this way, part of the connection surface 15 gradually comes into contact with the road surface, thereby compensating, at least in part, for the possibility of the tread surface portion partially rising at the rear edge of the block 10.

The behaviour of the block 10 made in a shoulder region 5 during deformation as a result of a tangential stress F is exactly the same as that of a block 10a made in the central region 4 when it is subjected to similar tangential stress conditions.

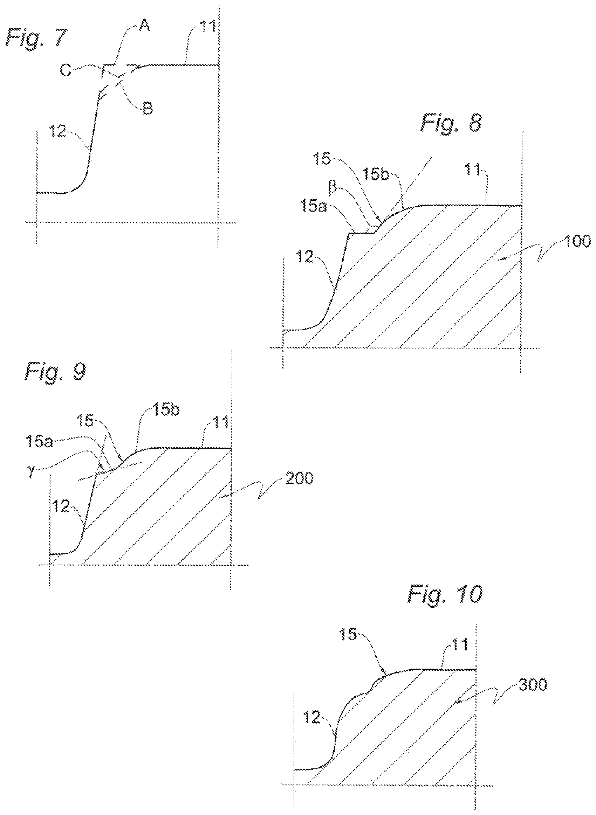

Fig. 8 shows a block 100 not formed in accordance with the present invention, in which features that are similar to those of the block 10 are indicated by the same reference numerals.

In the block 100, the first lateral wall 12 is connected to the tread surface portion 11 by means of a connection surface 15 comprising a first section 15a that is substantially planar and extends from the first lateral wall 12, and a second curvilinear section 15b that extends from the first section 15a and is connected to the tread surface portion 11 in a substantially tangential manner.

The first section 15a of the connection surface 15 is substantially parallel to the tread surface portion 11 and has a substantially constant width of approximately 2 mm, such that the profile of the first lateral wall 12 defines the profile of a step together with the first section 15a.

The second section 15b preferably has one arc of circumference that is connected to the tread surface portion 11 in a substantially tangential manner and is joined to the first section 15a so as to form an obtuse angle β of approximately 150° together therewith.

Fig. 9 shows a block 200 not formed in accordance with the present invention, in which features that are similar to those of the block 100 are indicated by the same reference numerals.

The block 200 differs from the block 100 in that both the first section 15a and the second section 15b of the connection surface 15 are curvilinear.

The first section 15a of the connection surface 15 is curvilinear, having a concavity that is directed towards the outside of the block 200, and is joined to the first lateral wall 12 so as to form an acute angle γ of between 60° and 90°.

The second section 15b extends from the first section 15a and is curvilinear, having a concavity that is directed towards the inside of the block 200, and is connected to the tread surface portion 11 in a substantially tangential manner.

Fig. 10 shows a block 300 not formed in accordance with the present invention, in which features that are similar to those of the block 10 are indicated by the same reference numerals.

In the block 300, the first lateral wall 12 has a curvilinear profile having a concavity that is directed towards the inside of the block 300, and is connected to the tread surface portion 11 by means of a connection surface 15, which has a concavity of the same sign, and is connected to the tread surface portion 11 in a substantially tangential manner.

### MODEL SIMULATIONS

Using a mathematical model based on Finite Elements developed by the applicant, the deformation of a substantially rectangular block, which is subjected to a tangential stress directed perpendicularly towards the front edge, whereby the first lateral wall is connected to the tread surface portion at the front edge in various ways, has been simulated and analysed.

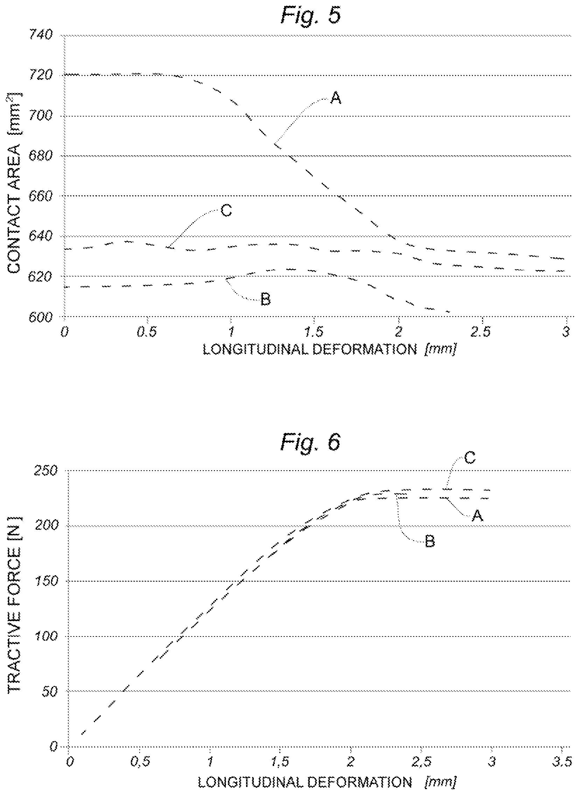

In particular, deformation of the following was studied:
- a first block in which the first lateral wall is directly connected to the tread surface portion without a connection surface (line A in Fig. 5 to 7),
- a second block in which the first lateral wall is connected to the tread surface portion by means of a planar connection surface that is at an acute angle of approximately 60° to the first lateral wall (line B in Fig. 5 to 7), and
- a third block in which the first lateral wall is connected to the tread surface portion by means of a connection surface having a profile in accordance with the present invention and shaped as per the first embodiment described above with reference to Fig. 4 (line C in Fig. 5 to 7), having a width of 2.5 mm, a depth of 0.7 mm, a radius of curvature of 5 mm and forming an acute angle of 60° with the lateral wall.

The profiles of the blocks described above are shown schematically in Fig. 7.

For each type of these blocks, the area of contact with the road surface was first calculated as a function of the deformation deriving from a tangential stress (graph in Fig. 5), and then the tractive force exerted on the ground was calculated (graph in Fig. 6).

The results of the simulations relating to the contact area are given in the graph in Fig. 5, from which it can be deduced that, when no tangential stresses are exerted, the block having a traditional shape (line A) has a higher initial contact area than the other two blocks (lines B and C).

It can also be seen that, when deformation caused by tangential stresses does not occur, the block according to the invention (line C) has a larger contact area than the block comprising the planar connection surface (line B), despite the fact that the tread surface portion of the block C is smaller than that of the block B.

This is due to the fact that, even when no tangential stresses are exerted, the block is, however, deformed by a force that is perpendicular to the tread surface when it is in contact with the road surface (due to the weight of the vehicle). In fact, since the connection surface is connected to the tread surface portion in a substantially tangential manner, the connection surface portion immediately adjacent to the line of contact between the two surfaces has a much smaller depth than the plane defined by the tread surface such that the deformation of the block as a result of the weight of the vehicle is sufficient to bring said connection surface portion into contact with the road surface.

However, the graph shows how, as the magnitude of the deformation increases as a result of the tangential stress, the contact area of the block having the traditional shape (line A) rapidly and noticeably decreases due to the rear edge rising, whereas said contact area remains more uniform in the other two blocks, in particular in the block according to the invention whose contact area remains almost constant even in the event of very large deformations.

In particular, as the degree of longitudinal deformation of the block passes from 0 to 3 mm, the contact area decreases by approximately 13% for the traditional block (line A) and by less than 2% for the block according to the invention (line C).

In the case of the second block (line B), too, it is clear that the area that is in contact with the ground has already noticeably decreased, already at a longitudinal deformation of the block of 2.3 mm.

The results of the simulations relating to the tractive force exerted on the ground are shown in the graph in Fig. 6, from which it can be deduced that the block having a traditional shape (line A) exerts a tractive force that increases up to a deformation of approximately 2 mm, after which it remains substantially constant.

Advantageously, the block according to the invention (line C) exerts a tractive force that increases up to a deformation of approximately 2.3 mm, after which it remains substantially constant at a value that is greater than the value for the other two blocks.

In particular, the maximum value for the force exerted by the block according to the invention (line C) is approximately 3 % greater than the maximum value for the traditional block (line A) and approximately 2 % greater than the maximum value for the block having the planar connection surface (line B).

### EXPERIMENTAL EXAMPLE

245/40 R21 tyres, currently sold by the applicant (comparative), were measured in comparison with tyres of the same size and tread pattern formed according to the preferred example of the present invention described above with reference to Fig. 2 to 4 (invention).

In particular, the applicant carried out a series of tests according to acknowledged standards, both on a wet road surface and on a dry road surface, in order to measure and evaluate the performance of the tyres during braking.

The results of the tests are summarised in the following table, Table 1, in which the values for the parameters are expressed in percent, whereby the values relating to the comparative tyre are equal to 100.

**Table 1**

| | Comparative | Invention |
|---|---|---|
| Braking on a dry road surface | 100 | 102 |
| Braking on a wet road surface | 100 | 103 |

The tests have therefore shown how the tyre of the invention therefore displays a significant improvement when braking on a dry surface as well as on a wet surface.

## Claims

1. Tyre (1) for vehicle wheels, comprising a tread band (2), on which a radially external tread surface (3) and a plurality of recesses (9; 9a) that delimit a plurality of blocks (10, 10a; 100; 200; 300) of said tread band are defined, wherein:
- each block comprises a tread surface portion (11) and a first lateral wall (12) that extends, at least partially, from a bottom (13) of one of said recesses towards said tread surface portion,
- said first lateral wall (12) is connected, at least for a section thereof, to said tread surface portion (11) by a connection surface (15) having an entirely curvilinear profile,
- said connection surface (15) is joined to said first lateral wall along a first contact line, at which the tangent plane of said first lateral wall and the tangent plane of said connection surface form an acute angle (α) that is greater than 20° such that a corner is defined between said connection surface (15) and said first lateral wall (12),
- said connection surface (15) is joined to said tread surface portion (11) along a second contact line in a substantially tangential manner,
- said connection surface (15) has a width (L) of between 1 mm and 3 mm, and
- said profile of said connection surface (15) is an arc of a circumference.

2. Tyre according to claim 1, wherein said connection surface (15) is joined to said first lateral wall (12) at an average depth of less than 50 % of the depth of said recess.

3. Tyre according to either claim 1 or claim 2, wherein said connection surface (15) is joined to said first lateral wall (12) at an average depth of less than 35 % of the depth of said recess.

4. Tyre according to any one of the preceding claims, wherein said connection surface (15) is joined to said first lateral wall (12) at an average depth of less than 2 mm.

5. Tyre according to any one of the preceding claims, wherein said connection surface (15) is joined to said first lateral wall (12) at an average depth of more than 0.2 mm.

6. Tyre according to any one of the preceding claims, wherein said connection surface (15) is joined to said first lateral wall (12) at an average depth of between 0.4 mm and 1.5 mm.

7. Tyre according to any one of the preceding claims, wherein said connection surface (15) is joined to said first lateral wall (12) at a variable depth along the longitudinal extent of said first lateral wall.

8. Tyre according to any one of the preceding claims, wherein said acute angle (α) formed by the tangent plane of said first lateral wall (12) and by the tangent plane of said connection surface (15) at said line of contact between said connection surface and said first lateral wall is between 30° and 75°, preferably between 40° and 70°, more preferably between 55° and 65°.

9. Tyre according to any one of the preceding claims, wherein the volumetric removed block portion defined by said connection surface (15) is a fraction that is smaller than approximately 4% of the volume of said block, preferably is a fraction that is smaller than approximately 2% of the volume of said block, more preferably is a fraction that is smaller than approximately 1% of the volume of said block, and even more preferably is a fraction that is smaller than approximately 0.5% of the volume of said block.

10. Tyre according to any one of the preceding claims, wherein said connection surface (15) extends between said first lateral wall (12) and said tread surface portion (11) by a section that is larger than 50% of the longitudinal extension of said first lateral wall (12), preferably by a section that is larger than 90% of the longitudinal extension of said first lateral wall (12).

11. Tyre according to any one of the preceding claims, wherein said plurality of blocks comprises blocks (10) provided in a shoulder region (5) of said tread band (2), in which blocks said connection surface (15) is joined to said first lateral wall (12) at a first depth with respect to said tread surface (3), and blocks (10a) provided in a central region (4) of said tread band (2), in which blocks said connection surface (15) is joined to said first lateral wall (12) at a second depth with respect to said tread surface (3), which second depth is smaller than said first depth.

12. Tyre according to claim 11, wherein said first depth is greater than said second depth by an amount of between 30% and 50% of said second depth.

13. Tyre according to any one of the preceding claims, wherein the arc of a circumference of the connection surface (15) has a radius of curvature of between 2 and 6 mm.

## Patentansprüche

1. Reifen (1) für Fahrzeugräder, umfassend einen Laufflächenring (2), an welchem eine radial äußere Lauffläche (3) und eine Vielzahl von Vertiefungen (9; 9a), die eine Vielzahl von Blöcken (10, 10a; 100; 200; 300) des Laufflächenrings begrenzen, definiert sind, wobei:
- jeder Block einen Laufflächen-Oberflächenabschnitt (11) und eine erste Seitenwand (12) umfasst, die sich zumindest zum Teil von einem Boden (13) einer der Vertiefungen bis zu dem Laufflächen-Oberflächenabschnitt hin erstreckt,
- die erste Seitenwand (12) zumindest über einen Abschnitt davon mit dem Laufflächen-Oberflächenabschnitt (11) durch eine Verbindungsoberfläche (15) verbunden ist, die ein vollständig kurvenförmiges Profil aufweist,
- die Verbindungsoberfläche (15) mit der ersten Seitenwand entlang einer ersten Kontaktlinie zusammengefügt ist, an welcher die Tangentialebene der ersten Seitenwand und die Tangentialebene der Verbindungsoberfläche einen spitzen Winkel (α) bilden, der größer als 20° ist, so dass eine Ecke zwischen der Verbindungsoberfläche (15) und der ersten Seitenwand (12) definiert ist,
- die Verbindungsoberfläche (15) mit dem Laufflächen-Oberflächenabschnitt (11) entlang einer zweiten Kontaktlinie auf im Wesentlichen tangentiale Weise zusammengefügt ist,
- die Verbindungsoberfläche (15) eine Breite (L) von zwischen 1 mm und 3 mm aufweist, und
- das Profil der Verbindungsoberfläche (15) ein Bogen eines Umfangs ist.

2. Reifen nach Anspruch 1, wobei die Verbindungsoberfläche (15) mit der ersten Seitenwand (12) an einer durchschnittlichen Tiefe von weniger als 50 % der Tiefe der Vertiefung zusammengefügt ist.

3. Reifen nach Anspruch 1 oder Anspruch 2, wobei die Verbindungsoberfläche (15) mit der ersten Seitenwand (12) an einer durchschnittlichen Tiefe von weniger als 35 % der Tiefe der Vertiefung zusammengefügt ist.

4. Reifen nach einem der vorhergehenden Ansprüche, wobei die Verbindungsoberfläche (15) mit der ersten Seitenwand (12) an einer durchschnittlichen Tiefe von weniger als 2 mm zusammengefügt ist.

5. Reifen nach einem der vorhergehenden Ansprüche, wobei die Verbindungsoberfläche (15) mit der ersten Seitenwand (12) an einer durchschnittlichen Tiefe von mehr als 0,2 mm zusammengefügt ist.

6. Reifen nach einem der vorhergehenden Ansprüche, wobei die Verbindungsoberfläche (15) mit der ersten Seitenwand (12) an einer durchschnittlichen Tiefe von zwischen 0,4 mm und 1,5 mm zusammengefügt ist.

7. Reifen nach einem der vorhergehenden Ansprüche, wobei die Verbindungsoberfläche (15) mit der ersten Seitenwand (12) an einer variablen Tiefe entlang der Längsausdehnung der ersten Seitenwand zusammengefügt ist.

8. Reifen nach einem der vorhergehenden Ansprüche, wobei der spitze Winkel (α), der durch die Tangentialebene der ersten Seitenwand (12) und durch die Tangentialebene der Verbindungsoberfläche (15) an der Kontaktlinie zwischen der Verbindungsoberfläche und der ersten Seitenwand gebildet wird, zwischen 30° und 75°, vorzugsweise zwischen 40° und 70°, noch bevorzugter zwischen 55° und 65° beträgt.

9. Reifen nach einem der vorhergehenden Ansprüche, wobei der volumetrische Teil der entfernten Blöcke, der durch die Verbindungsoberfläche (15) definiert wird, ein Bruchteil ist, der weniger als ungefähr 4 % des Volumens des Blocks beträgt, vorzugsweise ein Bruchteil ist, der weniger als ungefähr 2 % des Volumens des Blocks beträgt, noch bevorzugter ein Bruchteil ist, der weniger als ungefähr 1 % des Volumens des Blocks beträgt, und sogar noch bevorzugter ein Bruchteil ist, der weniger als ungefähr 0,5 % des Volumens des Blocks beträgt.

10. Reifen nach einem der vorhergehenden Ansprüche, wobei die Verbindungsoberfläche (15) sich zwischen der ersten Seitenwand (12) und dem Laufflächen-Oberflächenabschnitt (11) über einen Abschnitt erstreckt, der größer als 50 % der Längserstreckung der ersten Seitenwand (12) ist, vorzugsweise über einen Abschnitt, der größer als 90 % der Längserstreckung der ersten Seitenwand (12) ist.

11. Reifen nach einem der vorhergehenden Ansprüche, wobei die Vielzahl von Blöcken Blöcke (10), die in einem Schulterbereich (5) des Laufflächenrings (2) vorgesehen sind, wobei in diesen Blöcken die Verbindungsoberfläche (15) mit der ersten Seitenwand (12) an einer ersten Tiefe in Bezug auf die Lauffläche (3) zusammengefügt ist, und Blöcke (10a) umfasst, die in einem Zentralbereich (4) des Laufflächenrings (2) vorgesehen sind, wobei in diesen Blöcken die Verbindungsoberfläche (15) mit der ersten Seitenwand (12) an einer zweiten Tiefe in Bezug auf die Lauffläche (3) zusammengefügt ist, wobei die zweite Tiefe geringer als die erste Tiefe ist.

12. Reifen nach Anspruch 11, wobei die erste Tiefe in einem Ausmaß von zwischen 30 % und 50 % der zweiten Tiefe größer als die zweite Tiefe ist.

13. Reifen nach einem der vorhergehenden Ansprüche, wobei die Verbindungsoberfläche (15) einen Krümmungsradius von zwischen 2 und 6 mm aufweist.

## Revendications

1. Pneu (1) pour roues de véhicule, comprenant une bande de roulement (2), sur laquelle une surface de bande de roulement radialement externe (3) et une pluralité d'évidements (9 ; 9a) qui délimitent une pluralité de blocs (10, 10a ; 100 ; 200 ; 300) de ladite bande de roulement sont définis, dans lequel :
- chaque bloc comprend une partie de surface de bande de roulement (11) et une première paroi latérale (12) qui s'étend, au moins partiellement, depuis un fond (13) de l'un desdits évidements vers ladite partie de surface de bande de roulement,
- ladite première paroi latérale (12) est reliée, au moins pour une section de celle-ci, à ladite partie de surface de bande de roulement (11) par une surface de liaison (15) ayant un profil entièrement curviligne,
- ladite surface de liaison (15) est raccordée à ladite première paroi latérale le long d'une première ligne de contact, au niveau de laquelle le plan tangent de ladite première paroi latérale et le plan tangent de ladite surface de liaison forment un angle aigu (α) qui est supérieur à 20° de sorte qu'un coin soit défini entre ladite surface de liaison (15) et ladite première paroi latérale (12),
- ladite surface de liaison (15) est raccordée à ladite partie de surface de bande de roulement (11) le long d'une deuxième ligne de contact de manière essentiellement tangentielle,
- ladite surface de liaison (15) a une largeur (L) comprise entre 1 mm et 3 mm, et
- ledit profil de ladite surface de liaison (15) est un arc d'une circonférence.

2. Pneu selon la revendication 1, dans lequel ladite surface de liaison (15) est raccordée à ladite première paroi latérale (12) à une profondeur moyenne inférieure à 50% de la profondeur dudit évidement.

3. Pneu selon la revendication 1 ou 2, dans lequel ladite surface de liaison (15) est raccordée à ladite première paroi latérale (12) à une profondeur moyenne inférieure à 35% de la profondeur dudit évidement.

4. Pneu selon l'une quelconque des revendications précédentes, dans lequel ladite surface de liaison (15) est raccordée à ladite première paroi latérale (12) à une profondeur moyenne inférieure à 2 mm.

5. Pneu selon l'une quelconque des revendications précédentes, dans lequel ladite surface de liaison (15) est raccordée à ladite première paroi latérale (12) à une profondeur moyenne supérieure à 0,2 mm.

6. Pneu selon l'une quelconque des revendications précédentes, dans lequel ladite surface de liaison (15) est raccordée à ladite première paroi latérale (12) à une profondeur moyenne comprise entre 0,4 mm et 1,5 mm.

7. Pneu selon l'une quelconque des revendications précédentes, dans lequel ladite surface de liaison (15) est raccordée à ladite première paroi latérale (12) à une profondeur variable le long de l'étendue longitudinale de ladite première paroi latérale.

8. Pneu selon l'une quelconque des revendications précédentes, dans lequel ledit angle aigu (α) formé par le plan tangent de ladite première paroi latérale (12) et par le plan tangent de ladite surface de liaison (15) au niveau de ladite ligne de contact entre ladite surface de liaison et ladite première paroi latérale est compris entre 30° et 75°, de préférence entre 40° et 70°, plus préférablement entre 55° et 65°.

9. Pneu selon l'une quelconque des revendications précédentes, dans lequel la partie de bloc volumétrique retirée définie par ladite surface de liaison (15) est une fraction qui est inférieure à environ 4% du volume dudit bloc, de préférence est une fraction qui est inférieure à environ 2% du volume dudit bloc, plus préférablement est une fraction qui est inférieure à environ 1% du volume dudit bloc, et encore plus préférablement est une fraction qui est inférieure à environ 0,5% du volume dudit bloc.

10. Pneu selon l'une quelconque des revendications précédentes, dans lequel ladite surface de liaison (15) s'étend entre ladite première paroi latérale (12) et ladite partie de surface de bande de roulement (11) sur une section qui est supérieure à 50% de l'extension longitudinale de ladite première paroi latérale (12), de préférence sur une section qui est supérieure à 90% de l'extension longitudinale de ladite première paroi latérale (12) .

11. Pneu selon l'une quelconque des revendications précédentes, dans lequel ladite pluralité de blocs comprend des blocs (10) prévus dans une région d'épaulement (5) de ladite bande de roulement (2), dans ces blocs ladite surface de liaison (15) est raccordée à ladite première paroi latérale (12) à une première profondeur par rapport à ladite surface de bande de roulement (3), et des blocs (10a) prévus dans une région centrale (4) de ladite bande de roulement (2), dans ces blocs ladite surface de liaison (15) est raccordée à ladite première paroi latérale (12) à une deuxième profondeur par rapport à ladite surface de bande de roulement (3), cette deuxième profondeur est inférieure à ladite première profondeur.

12. Pneu selon la revendication 11, dans lequel ladite première profondeur est supérieure à ladite deuxième profondeur d'une quantité comprise entre 30% et 50% de ladite deuxième profondeur.

13. Pneu selon l'une quelconque des revendications précédentes, dans lequel l'arc d'une circonférence de la surface de liaison (15) a un rayon de courbure compris entre 2 et 6 mm.
